# FASCICULE DE BREVET EUROPEEN

(11) **EP 3 954 496 B1**
(45) Date de publication et mention de la délivrance du brevet: **02.08.2023**
(21) Numéro de dépôt: 21179441.7
(22) Date de dépôt: 15.06.2021
(51) Int. Cl.: B23P 19/12, F16C 11/04

(54) **DISPOSITIF ET PROCÉDÉ DE MANIPULATION D'UN AXE FORMANT UNE LIAISON PIVOTANTE ENTRE AU MOINS DEUX PIÈCES**
VORRICHTUNG UND VERFAHREN ZUR HANDHABUNG EINER WELLE, DIE EINE SCHWENKBARE VERBINDUNG ZWISCHEN MINDESTENS ZWEI TEILEN BILDET
DEVICE AND METHOD FOR HANDLING AN AXIS FORMING A PIVOTING LINK BETWEEN AT LEAST TWO PARTS

(30) Priorité: 06.08.2020 FR 2008331
(43) Date de publication de la demande: 16.02.2022
(73) Titulaire: AIRBUS OPERATIONS (S.A.S.), 31060 Toulouse (FR)
(72) Inventeur: LACAMPAGNE, Jean-Paul, 31060 TOULOUSE Cedex 9 (FR); DARGEIN, Sébastien, 31060 TOULOUSE Cedex 9 (FR)
(74) Mandataire: Jardel, Marc Henry Philippe

(56) Documents cités:
- FR-A1- 3 074 073
- GB-A- 1 587 939
- US-A- 3 050 840
- US-A1- 2008 092 970

## Description

La présente demande se rapporte à un dispositif et un procédé de manipulation d'un axe formant une liaison pivotante entre des première et deuxième pièces selon le préambule des revendications 1 et 5. Un tel dispositif et un tel procédé sont connus de la demande GB 1 587 939 A.

Il est connu de la demande GB 1 587 939 A un dispositif de fixation destiné à être placé dans une ouverture et comprenant un manchon déformable et un élément de déformation de manchon destiné à être inséré dans l'ouverture.

Il est connu de la demande FR 3 074 073 A1 un dispositif de manipulation d'un axe destiné à créer une liaison pivotante entre une première pièce et une deuxième pièce. Ce dispositif de manipulation permet d'engager un axe creux dans des orifices des première et deuxième pièces, mais aussi de dégager l'axe creux de ces orifices. Le dispositif de manipulation comprend notamment un module d'extraction de l'axe qui est engagé dans le ou les orifices des première et deuxième pièces. Le module d'extraction comprend un système de détection configuré pour détecter une résistance susceptible de s'exercer sur l'axe et tendant à empêcher le dégagement de celui-ci. Le module d'extraction est configuré pour dégager l'axe du ou des orifices des première et deuxième pièces si la résistance détectée par le système de détection est inférieure à un seuil prédéterminé.

La présente vise à proposer une solution alternative à ce dispositif.

A cet effet, l'invention a pour objet un dispositif de manipulation d'un axe présentant un orifice débouchant en son centre et formant un axe creux et une liaison entre des première et deuxième pièces.

Selon l'invention, le dispositif comprend :
- un corps s'étendant selon un axe longitudinal, configuré pour être inséré dans l'orifice, le corps présentant une portion externe filetée et un alésage s'étendant selon l'axe longitudinal,
- une tige filetée insérée dans l'alésage du corps et présentant des première et deuxième extrémités,
- un écrou papillon monté en translation par vissage sur la première extrémité de la tige filetée le long de l'axe longitudinal selon une deuxième direction,
- une bague de serrage expansible agencée sur la deuxième extrémité de la tige filetée, et déformable sous l'action de l'écrou papillon entre une position libre dans laquelle le corps est mobile en translation par rapport à l'axe le long de l'axe longitudinal et une position déformée dans laquelle la translation du corps par rapport à l'axe le long de l'axe longitudinal selon une première direction opposée à la deuxième direction est bloquée,
- un écrou de compression vissé sur la portion externe filetée du corps le long de l'axe longitudinal selon la deuxième direction,
- un organe d'appui destiné à être disposé contre l'une des première ou deuxième pièces, et
- des moyens de rappel disposés entre l'écrou de compression et l'organe d'appui et configurés pour être comprimés entre l'écrou de compression et l'organe d'appui par le vissage de l'écrou de compression et pour se décompresser dans la deuxième direction sous l'action de l'écrou de compression.

Avantageusement, le dispositif selon l'invention permet de manipuler un axe formant une liaison pivotante entre deux pièces de façon simple et rapide. Ainsi, ce dispositif facilite et accélère les opérations de maintenance pour changer (i.e. extraire et insérer) un axe d'une liaison pivotante.

De plus, ce dispositif permet de contrôler la charge appliquée sur l'axe pendant l'extraction et l'insertion de ce dernier dans les orifices des pièces de sorte à former la liaison pivotante. La charge qui s'applique sur l'axe lors de la manipulation de ce dernier est ainsi constante et contrôlée.

En outre, ce dispositif permet la manipulation de l'axe depuis un seul côté de la liaison pivotante.

Selon une autre caractéristique, la bague de serrage expansible comprend :
- un écrou de forme tronconique encastré sur la deuxième extrémité de la tige filetée, et
- une bague déformable dans une direction transversale à l'axe longitudinal et présentant au moins une rainure, la bague étant solidaire du corps, la rainure de la bague étant configurée pour être déformée par la forme tronconique de l'écrou lors du vissage de l'écrou papillon.

Selon l'invention, l'écrou de compression comporte :
- une rondelle mobile en translation selon l'axe longitudinal et en rotation autour de l'axe longitudinal, et comprenant des créneaux, et
- un contre-écrou vissé sur la portion filetée du corps et comprenant des créneaux de forme complémentaire à la forme des créneaux de la rondelle, les créneaux du contre-écrou étant configurés pour coopérer avec les créneaux de la rondelle de sorte à bloquer la translation de la rondelle selon l'axe longitudinal selon la première direction.

Selon une autre caractéristique, le dispositif comprend une butée configurée pour arrêter la compression des moyens de rappel. Cette butée permet de limiter la charge qui s'applique sur l'axe, et de la rendre constante en contrôlant le taux de compression maximum des moyens de rappel.

Selon une autre caractéristique, le dispositif comprend une poignée agencée à une extrémité du corps. Cette poignée permet de faciliter la manipulation du corps.

L'invention concerne également un procédé de manipulation d'un axe présentant un orifice débouchant en son centre et formant un axe creux et une liaison entre des première et deuxième pièces, au moyen d'un dispositif de manipulation comprenant un corps s'étendant selon un axe longitudinal et présentant une portion externe filetée et un alésage s'étendant selon l'axe longitudinal, une tige filetée insérée dans l'alésage du corps et présentant des première et deuxième extrémités, un écrou papillon vissé sur la première extrémité de la tige filetée, une bague de serrage expansible agencée sur la deuxième extrémité de la tige filetée, un écrou de compression comportant une rondelle comprenant des créneaux et un contre-écrou vissé sur la portion externe filetée du corps et comprenant des créneaux de forme complémentaire à la forme des créneaux de la rondelle, un organe d'appui disposé contre l'une des première ou deuxième pièces, et des moyens de rappel disposés entre la rondelle et l'organe d'appui.

Selon l'invention, le procédé comprend les étapes consistant en :
- insertion du corps dans l'orifice ;
- vissage de l'écrou papillon sur la tige filetée le long de l'axe longitudinal selon une deuxième direction de sorte à déformer la bague de serrage expansible et à bloquer la translation du corps par rapport à l'axe le long de l'axe longitudinal selon une première direction opposée à la deuxième direction ;

- translation de la rondelle le long de l'axe longitudinal selon la deuxième direction de sorte à comprimer les moyens de rappel ; et
- vissage du contre-écrou de sorte à faire coopérer les créneaux du contre-écrou avec les créneaux de la rondelle et bloquer la translation de la rondelle selon l'axe longitudinal dans la première direction ; et
- rotation de la rondelle autour de l'axe longitudinal de sorte à faire glisser les créneaux de la rondelle contre les créneaux du contre-écrou de manière à décompresser les moyens de rappel dans la deuxième direction.

D'autres caractéristiques et avantages ressortiront de la description de l'invention qui va suivre, description donnée à titre d'exemple uniquement, en regard des dessins annexés parmi lesquels :
La figure 1 est une vue en coupe d'une liaison pivotante entre des première et deuxième pièces formée par un axe et d'un dispositif de manipulation de l'axe, non conforme à l'invention,
La figure 2 est une vue en coupe d'une liaison pivotante entre des première et deuxième pièces formée par un axe et d'un dispositif de manipulation de l'axe, non conforme à l'invention,
La figure 3 est une vue en coupe d'une liaison pivotante entre des première et deuxième pièces formée par un axe et d'un dispositif de manipulation de l'axe, non conforme à l'invention,
La figure 4 est une vue en coupe d'une liaison pivotante entre des première et deuxième pièces formée par un axe et d'un dispositif de manipulation de l'axe, non conforme à l'invention,
La figure 5 est une vue en coupe d'une partie d'un dispositif de manipulation d'un axe formant une liaison pivotante entre des première et deuxième pièces, selon un mode de réalisation de l'invention,
La figure 6 est une vue en coupe d'une partie d'un dispositif de manipulation d'un axe formant une liaison pivotante entre des première et deuxième pièces, selon un mode de réalisation de l'invention,
La figure 7 est une vue en coupe d'une partie d'un dispositif de manipulation d'un axe formant une liaison pivotante entre des première et deuxième pièces, selon un mode de réalisation de l'invention, et
La figure 8 est une vue en coupe d'une partie d'un dispositif de manipulation d'un axe formant une liaison pivotante entre des première et deuxième pièces, selon un mode de réalisation de l'invention.

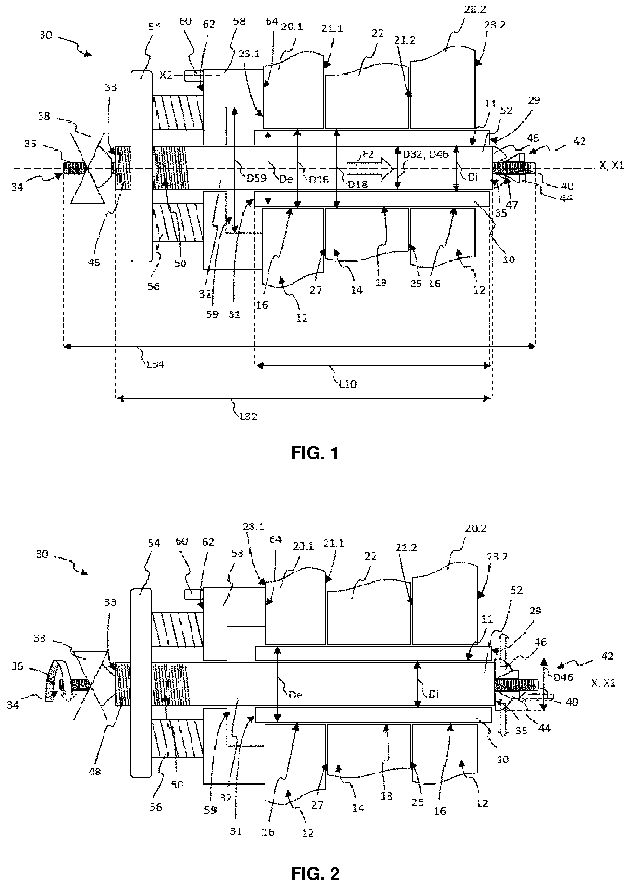

Sur les figures 1 à 4, une liaison pivotante entre une première pièce 12 et une deuxième pièce 14 est représentée.

Selon une application, la première pièce 12 est un capot d'une nacelle d'aéronef, et la deuxième pièce 14 est le reste de la nacelle (ou inversement).

Selon une autre application, la première pièce 12 correspond à un mât et la deuxième pièce 14 correspond à un moteur d'aéronef (ou inversement).

La première pièce 12 comporte une chape présentant une première branche 20.1 et une deuxième branche 20.2, chaque branche 20.1, 20.2 présentant un orifice 16, et la deuxième pièce 14 comporte un bras 22 positionné entre les branches 20.1, 20.2 de la chape, et présente un orifice 18. Les orifices 16, 18 sont coaxiaux. Les orifices 16, 18 sont lisses, c'est-à-dire non taraudés.

Un axe 10 est positionné dans les orifices 16, 18 coaxiaux prévus dans les branches 20.1, 20.2 de la chape et le bras 22. L'axe 10 relie le bras 22 et les branches 20.1, 20.2 de la chape, et forme ainsi une liaison pivotante entre la chape et le bras 22. L'axe 10 forme un axe de pivotement X.

Pour la suite de la description, une direction longitudinale est une direction parallèle à l'axe de pivotement X, et une direction radiale est une direction perpendiculaire à l'axe de pivotement X. Un plan longitudinal est un plan qui passe par l'axe de pivotement X, et un plan transversal est un plan perpendiculaire à l'axe de pivotement X.

Les branches 20.1, 20.2 de la chape comportent chacune une face intérieure 21.1, 21.2 orientée vers l'autre branche 20.1, 20.2 et une face extérieure 23.1, 23.2 opposée à la face intérieure 21.1, 21.2. Les faces intérieures 21.1, 21.2 et les faces extérieures 23.1, 23.2 sont parallèles entre elles et positionnées dans des plans transversaux. Pour chaque branche 20.1, 20.2, un orifice 16 débouche au niveau d'une face intérieure 21.1, 21.2 et d'une face extérieure 23.1, 23.2, et présente un axe de révolution perpendiculaire aux faces intérieure et extérieure.

Le bras 22 est ainsi positionné entre les faces intérieures 21.1, 21.2 des branches 20.1, 20.2 de la chape et comprend des faces latérales 25, 27 parallèles entre elles et positionnées dans des plans transversaux. L'orifice 18 débouche au niveau des faces latérales 25, 27 et présente un axe de révolution perpendiculaire à celles-ci.

L'axe 10 est cylindrique et présente un axe de révolution confondu avec l'axe de pivotement X. L'axe 10 s'étend entre des première et deuxième faces terminales 29, 31 qui s'étendent dans des plans transversaux à l'axe de pivotement X. L'axe 10 est un axe creux qui présente un orifice 11 centré sur l'axe de pivotement X et débouchant sur les faces terminales 29, 31.

Le diamètre extérieur De (dimension dans une direction radiale à l'axe de pivotement X la plus éloignée de l'axe de pivotement X) de l'axe 10 est sensiblement égal au diamètre D16 des orifices 16 de la première pièce 12 et au diamètre D18 (dimension dans une direction radiale à l'axe de pivotement X) de l'orifice 18 de la deuxième pièce 14. L'axe 10 est inséré dans les orifices 16, 18 des pièces 12, 14 par glissement.

Un dispositif 30 permettant de manipuler l'axe 10 comporte un corps 32 de forme cylindrique et qui s'étend selon un axe longitudinal X1. Le corps 32 s'étend entre des première et deuxième faces terminales 33, 35 qui s'étendent dans des plans transversaux à l'axe longitudinal X1. Le corps 32 est configuré pour être inséré dans l'orifice 11 de l'axe 10 le long de l'axe longitudinal X1, selon une deuxième direction (représentée par la flèche F2 sur la figure 1), dite direction d'engagement ou d'insertion de l'axe 10. Le corps 32 et l'axe 10 sont coaxiaux lorsque le corps 32 est introduit dans l'axe 10, et l'axe longitudinal X1 est alors confondu avec l'axe de pivotement X. Le corps 32 présente un diamètre D32 sensiblement égal, voire légèrement inférieur, au diamètre intérieur Di (dimension dans une direction radiale à l'axe de pivotement X la plus proche de l'axe de pivotement X) de l'axe 10.

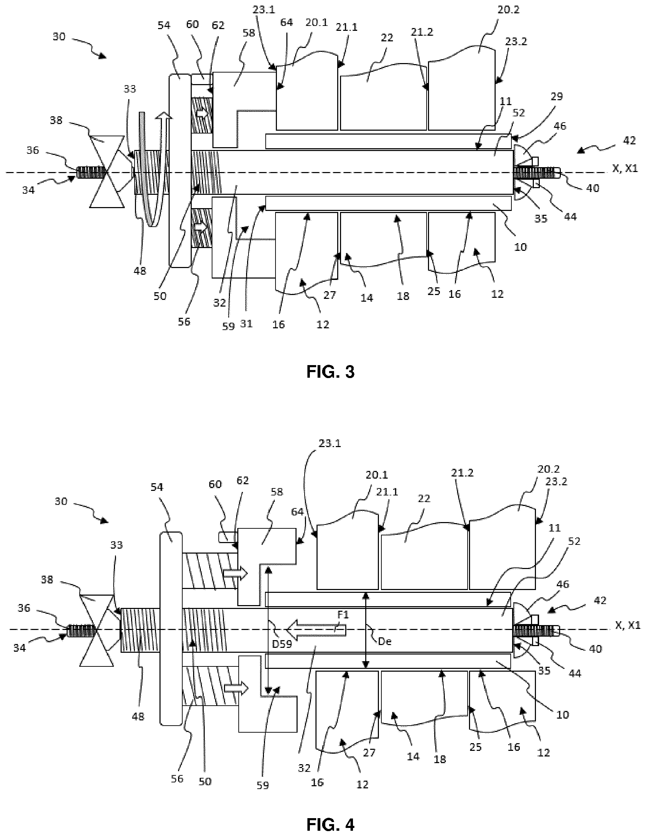

La translation du corps 32 par rapport à l'axe 10 le long de l'axe longitudinal X1 (confondu avec l'axe de pivotement X) selon une première direction (représentée par la flèche F1 sur la figure 4), dite direction de désengagement ou d'extraction de l'axe 10, opposée à la deuxième direction F2, est bloquée. Pour cela, le dispositif 30 comprend une tige filetée 34, un écrou papillon 38 (également appelé écrou à oreilles) et une bague de serrage expansible 42.

Le corps 32 comporte des première et deuxième extrémités 48, 52 et présente un alésage (non visible) s'étendant selon l'axe longitudinal X1, et dans lequel est insérée une tige filetée 34. L'alésage du corps 32 est lisse, c'est-à-dire non taraudé.

La longueur L34 (dimension dans une direction longitudinale à l'axe de pivotement X) de la tige filetée 34 est supérieure à la longueur L32 du corps 32, qui est supérieure à la longueur L10 de l'axe 10.

L'écrou papillon 38 est agencé à une première extrémité 36 de la tige filetée 34, et est vissé sur celle-ci le long de l'axe longitudinal X1 selon la deuxième direction F2.

La bague de serrage expansible 42 est agencée à une deuxième extrémité 40 de la tige filetée 34, et est configurée pour se déformer dans une direction transversale à l'axe longitudinal X1 lors du vissage de l'écrou papillon 38. La bague de serrage expansible 42 est déformable, sous l'action de l'écrou papillon 38, entre une position libre dans laquelle le corps 32 est mobile en translation par rapport à l'axe 10 le long de l'axe longitudinal X1 et une position déformée dans laquelle la translation du corps 32 par rapport à l'axe 10 le long de l'axe longitudinal X1 selon la première direction F1 est bloquée.

Plus précisément, la bague de serrage expansible 42 comprend un écrou 44 de forme tronconique qui est encastré sur la deuxième extrémité 40 de la tige filetée 34, et une bague 46 déformable dans une direction transversale à l'axe longitudinal X1 qui est agencée sur la deuxième extrémité 40 de la tige filetée 34. La bague 46 présente une ou plusieurs rainures 47 centrées sur l'axe longitudinal X1. La bague 46 est solidaire de la deuxième face 35 du corps 32. La bague 46 présente, en position non déformée comme représentée sur la figure 1, un diamètre D46 sensiblement égal au diamètre D32 du corps 32. L'écrou papillon 38 et l'écrou 44 sont agencés sur la tige filetée 34, à distance du corps 32. La rainure 47 de la bague 46 est configurée pour être déformée par la forme tronconique de l'écrou 44 lors du vissage de l'écrou papillon 38 sur la tige filetée 34.

Le vissage de l'écrou papillon 38 sur la tige filetée 34 entraîne un déplacement de la tige filetée 34 le long de l'axe longitudinal X1 dans la première direction F1. Lors du vissage de l'écrou papillon 38, l'écrou 44, qui est encastré sur la tige filetée 34, est entraîné en translation selon l'axe longitudinal X1, et se rapproche alors de la bague 46 et l'écrou papillon 38. Le vissage de l'écrou papillon 38 entraîne une mise en contact de la forme tronconique de l'écrou 44 avec la ou les rainures 47 de la bague 46, puis une déformation de la bague 46. L'écrou 44 est solidaire de l'extrémité 40 de la tige filetée 50, et non pas simplement vissé sur celle-ci, afin d'éviter un dé-serrage de l'écrou 44 lors du vissage de l'écrou papillon 38 à l'autre extrémité 36 de la tige filetée 50. Comme représenté sur la figure 2, lors du vissage, l'écrou papillon 38 se rapproche du corps 32, puis entre en contact avec la première face 33 du corps 32 ; et l'écrou 44 se rapproche de la bague 46, qui est solidaire du corps 32, puis entre en contact avec la ou les rainures 47 de la bague 46, s'engage dans la ou les rainures 47 et les déforme en les écartant. Une fois l'écrou papillon 38 vissé, celui-ci est en appui contre la première extrémité 48 corps 32 ; et la bague de serrage expansible 42, composée de l'écrou 44 engagé dans la ou les rainures 47 de la bague 46 de sorte que la bague 46 est déformée, est solidaire de la deuxième extrémité 52 du corps 32.

En position déformée représentée sur la figure 2, la bague 46 a un diamètre D46 strictement supérieur au diamètre Di de l'axe 10, et inférieur ou égal au diamètre De de l'axe 10. En position déformée, la bague 46 est donc solidaire du corps 32 et en appui contre l'axe 10. La déformation de la bague 46 dans une direction transversale à l'axe longitudinal X1 lors du vissage de l'écrou papillon 38 bloque ainsi la translation du corps 32 par rapport à l'axe 10 le long de l'axe longitudinal X1 selon la première direction F1. Ainsi, l'écrou 44 et la bague 46 en position déformée ont un rôle de blocage de la translation du corps 32 par rapport à l'axe 10 dans la première direction F1.

La bague de serrage expansible 42 permet de centrer l'axe 10 lors de l'insertion de ce dernier dans les orifices 16, 18 des première et deuxième pièces 12, 14 ; et de tirer l'axe 10 lors de l'extraction de ce dernier de ces orifices 16, 18.

Le corps 32 présente également une portion externe filetée 50 à son extrémité 48, qui est l'extrémité du corps 32 la plus proche de l'écrou papillon 38 et de la première extrémité 36 de la tige filetée 34.

Le dispositif 30 comprend un écrou de compression 54, qui est monté sur la portion externe filetée 50 du corps 32. L'écrou de compression 54 est vissé sur la portion externe filetée 50 du corps 32 le long de l'axe longitudinal X1 selon la deuxième direction F2.

Le dispositif 30 comporte également un organe d'appui 58 disposé contre l'une des première ou deuxième pièces 12, 14, ici contre la face extérieure 23.1 de la branche 20.1 de la chape. L'organe d'appui 58 est coaxial au corps 32, et s'étend autour d'une partie du corps 32. L'organe d'appui 58 comporte un alésage 59, centré sur l'axe longitudinal X1, et qui présente un diamètre D59 supérieur au diamètre extérieur De de l'axe 10. L'organe d'appui 58 comporte des première et deuxième surfaces 62, 64 s'étendant dans des plans transversaux à l'axe longitudinal X1. La surface 64 de l'organe d'appui 58 est agencée contre la face extérieure 23.1 de la branche 20.1 de la première pièce 12.

Le dispositif 30 comprend aussi des moyens de rappel 56 disposés entre l'écrou de compression 54 et l'organe d'appui 58. Les moyens de rappel 56 sont configurés pour être comprimés et pour se décompresser entre l'écrou de compression 54 et l'organe d'appui 58, le long de l'axe longitudinal X1. La force de rappel des moyens de rappel 56 est donc une force de translation selon l'axe longitudinal X1.

Selon un mode de réalisation, les moyens de rappel 56 comprennent un ressort. Les moyens de rappel peuvent tourner librement autour de l'axe longitudinal X1. Selon un autre mode de réalisation, les moyens de rappel 56 comprennent une pluralité de ressorts disposés autour d'une partie du corps 32.

Selon une configuration, une butée 60 configurée pour arrêter la compression des moyens de rappel 56 est fixée sur la surface 62 de l'organe d'appui 58. La butée 60 s'étend longitudinalement selon un axe longitudinal X2 parallèle à l'axe longitudinal X1, depuis la surface 62 de l'organe d'appui 58, en direction de l'écrou de compression 54.

Le vissage de l'écrou de compression 54 sur la portion externe filetée 50 du corps 32 entraîne une compression des moyens de rappel 56 le long de l'axe longitudinal X1 dans la deuxième direction F2, c'est-à-dire contre l'organe d'appui 58. Ainsi, les moyens de rappel 56 se compriment entre l'écrou de compression 54 et l'organe d'appui 58. L'écrou de compression 54 est vissé sur la portion externe filetée 50 jusqu'à atteindre la butée 60, tel que représenté sur la figure 3, qui arrête le vissage.

La longueur de la butée 60 est ajustable, en fonction de la force de rappel des moyens de rappel 56.

Comme représenté sur la figure 4, la force de rappel des moyens de rappel 56 s'exerce alors le long de l'axe longitudinal X1 selon la deuxième direction F2, et plus précisément en direction de l'organe d'appui 58. Ainsi, sous l'effet de leur force de rappel (et de l'action de l'écrou de compression 54, comme décrit en détails ci-dessous), les moyens de rappel 56 se décompressent, et l'organe d'appui 58 translate selon l'axe longitudinal X1, en s'éloignant de la face extérieure 23.1 de la branche 20.1 de la première pièce 12. En effet, l'écrou de compression 54 étant vissé (mouvement combiné de rotation autour l'axe longitudinal X1 et de translation selon l'axe longitudinal X1) sur le corps 32, la force de rappel des moyens de rappel 56, qui est une force de translation, se transmet à l'organe d'appui 58, qui n'est pas bloqué en translation selon l'axe longitudinal X1. La décompression des moyens de rappel 56 entraîne une translation du dispositif 30 le long de l'axe longitudinal X1, en s'éloignant de la première pièce 12. Plus précisément, comme les moyens de rappel 56 sont fixés à l'écrou de compression 54, qui est lui-même vissé sur le corps 32, la force de rappel des moyens de rappel 56 entraîne une translation du corps 32, et donc l'axe 10, puisque ces derniers sont liés en translation selon l'axe longitudinal X1, dans la première direction F1, via la bague de serrage expansible 42. L'axe 10 est ainsi partiellement désengagé des orifices 16, 18 des première et deuxième pièces 12, 14. L'axe 10 se situe alors partiellement dans l'alésage 59 de l'organe d'appui 58.

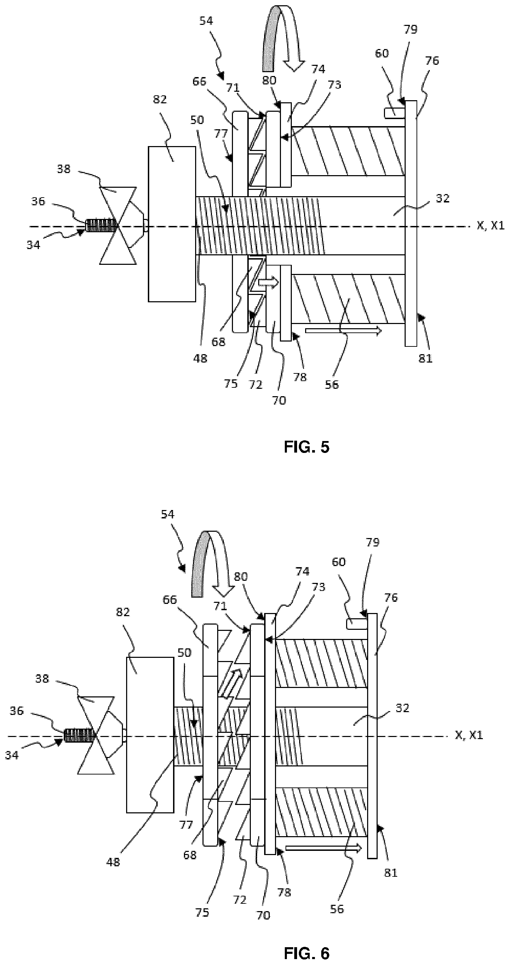

Le fonctionnement de l'écrou de compression 54 est détaillé sur les figures 5 à 8.

L'écrou de compression 54 comporte une rondelle 70 libre en translation selon l'axe longitudinal X1 et en rotation autour de l'axe longitudinal X1. La rondelle 70 s'étend dans un plan transversal à l'axe longitudinal X1, et présente des première et deuxième faces 71, 73 opposées l'une à l'autre. La rondelle 70 comporte des créneaux 72 arrangés sur toute la périphérie de sa première face 71.

L'écrou de compression 54 comporte également un contre-écrou 66 vissé sur la portion externe filetée 50 du corps 32. Le contre-écrou 66 s'étend dans un plan transversal à l'axe longitudinal X1, et présente des première et deuxième faces 75, 77 opposées l'une à l'autre. Le contre-écrou 66 comporte des créneaux 68, de forme complémentaire à la forme des créneaux 72, arrangés sur toute la périphérie de sa première face 75. Par exemple, sur les figures 5 à 8, les créneaux 68, 72 ont une forme de prisme droit à base triangulaire. Bien entendu, cette forme des créneaux 68, 72 n'est pas limitative et d'autres formes sont possibles pour ces créneaux 68, 72.

La première face 71 de la rondelle 70 est orientée vers la première face 75 du contre-écrou 66. Les créneaux 68 du contre-écrou 66 et les créneaux 72 de la rondelle 70 sont configurés pour coopérer ensemble de sorte à bloquer la translation de la rondelle 70 selon l'axe longitudinal X1 dans la première direction F1.

La rondelle 70 est mobile en translation selon l'axe longitudinal X1, notamment dans la deuxième direction F2, de manière à entraîner une compression des moyens de rappel 56. Le contre-écrou 56 est configuré pour maintenir les moyens de rappel 56 dans leur état de compression.

Comme représenté sur les figures 5 à 8, les moyens de rappel 56 sont agencés entre des premier et deuxième disques de maintien 74, 76 qui s'étendent dans des plans transversaux à l'axe longitudinal X1. Le premier disque de maintien 74 s'étend parallèlement à la surface 73 de la rondelle 70, et le deuxième disque de maintien 76 s'étend parallèlement à la surface de l'organe d'appui. Chaque disque de maintien 74, 76 présente une surface intérieure 78, 79 orientée vers l'autre disque de maintien 74, 76 et une surface extérieure 80, 81 opposée à la surface intérieure 78, 79. Les moyens de rappel 56 sont fixés sur les surfaces intérieures 78, 79 des disques de maintien 74, 76.

Selon une configuration représentée sur les figures 1 à 4, le disque de maintien 74 et la rondelle 70 sont formés en une seule pièce. Selon une autre configuration représentée sur les figures 5 à 8, le disque de maintien 74 et la rondelle 70 sont distincts l'un de l'autre.

Selon une configuration représentée sur les figures 1 à 4, le disque de maintien 76 et l'organe d'appui 58 sont formés en une seule pièce. Selon une autre configuration représentée sur les figures 5 à 8, le disque de maintien 76 et l'organe d'appui sont distincts l'un de l'autre.

Selon une configuration, la butée 60 est fixée sur la surface intérieure 79 du disque de maintien 76. La butée 60 s'étend longitudinalement selon un axe longitudinal X2 parallèle à l'axe longitudinal X1, depuis la surface intérieure 79 du disque de maintien 76, en direction du disque de maintien 74. Selon une configuration non représentée, la butée 60 est fixée sur la surface intérieure 78 du disque de maintien 74, et s'étend longitudinalement selon l'axe longitudinal X2, depuis la surface intérieure 78 du disque de maintien 74, en direction du disque de maintien 76. Ainsi, la butée 60 est localisée entre le disque de maintien 74 et le disque de maintien 76.

Lorsque les créneaux 72 de la rondelle 70 sont libres, une translation de la rondelle 70 le long de l'axe longitudinal X1 dans la deuxième direction F2, c'est-à-dire dans la direction du disque de maintien 74, entraîne une compression des moyens de rappel 56. En effet, lors de la translation de la rondelle 70, celle-ci entre en contact avec le disque de maintien 74, puis, sous l'effet de sa force de translation, comprime les moyens de rappel 56.

Comme représenté sur la figure 5, les créneaux 72 de la rondelle 70 coopèrent avec les créneaux 68 du contre-écrou 66. Dans ce cas, une rotation de la rondelle 70 autour de l'axe longitudinal X1 entraîne une libération des créneaux 72 de la rondelle 70. Ensuite, une translation de la rondelle 70 le long de l'axe longitudinal X1 dans la deuxième direction F2, entraîne une compression des moyens de rappel 56.

Une fois les moyens de rappel 56 comprimés par la rondelle 70, un vissage du contre-écrou 66 sur la portion externe filetée 50 du corps 32 entraîne un blocage de la translation de la rondelle 70 le long de l'axe longitudinal X1 selon la première direction F1, et donc un blocage d'une décompression des moyens de rappel 56 le long de l'axe longitudinal X1 dans la première direction F1. En effet, comme représenté sur la figure 6, le vissage du contre-écrou 66 entraîne un mouvement de rotation autour de l'axe longitudinal X1 et de translation le long de l'axe longitudinal X1 des créneaux 68 du contre-écrou 66, qui viennent au contact des créneaux 72 de la rondelle 70. Lors du vissage du contre-écrou 66, la force de translation qui s'applique à la rondelle 70 est maintenue, jusqu'à ce les créneaux 68, 72 soient en contact.

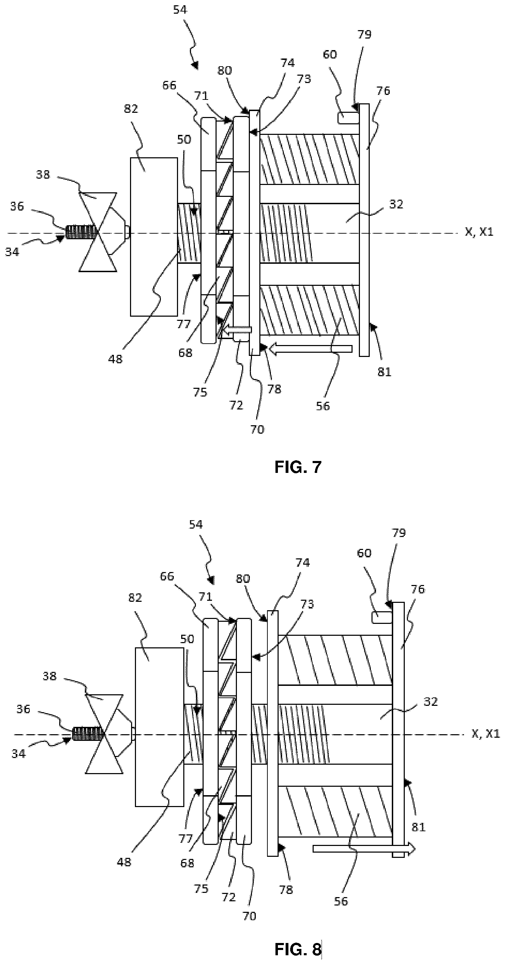

Une fois que les créneaux 68 du contre-écrou 66 sont en contact avec les créneaux 72 de la rondelle 70, la force de translation qui s'applique à la rondelle 70 est relâchée, et la force de rappel des moyens de rappel 56, qui sont comprimés, entraîne des mouvements de rotation et de translation de la rondelle 70 autour et le long de l'axe longitudinal X1, dans la première direction F1. Ceci permet de faire coopérer les créneaux 68 du contre-écrou 66 avec les créneaux 72 de la rondelle 70. En effet, lors du vissage du contre-écrou 66, les créneaux 68 peuvent ne pas être disposés parfaitement en face des créneaux 72 de la rondelle 70. Comme représenté sur la figure 7, lors du relâchement de la force de translation appliquée sur la rondelle 70, celle-ci, sous la force de rappel des moyens de rappel 56, est poussée en direction du contre-écrou 66, jusqu'à ce que les créneaux 68, 72 coopèrent entre eux. Les moyens de rappel 56 sont alors bloqués en position de compression entre les disques de maintien 74, 76.

Une rotation de la rondelle 70 autour de l'axe longitudinal X1, dans le sens de la pente des créneaux 68, 72, permet de faire glisser les créneaux 72 de la rondelle 70 contre les créneaux 68 du contre-écrou 66, jusqu'à ce qu'un créneau 72 coopère avec un autre créneau 70 (le créneau 70 suivant). La rotation de la rondelle 70 comprime les moyens de rappel 56 (de la hauteur des créneaux). Lors du passage d'un créneau au créneau suivant, sous l'action des moyens de rappel 56 qui se décompressent brutalement sur une faible distance (la hauteur des créneaux), les créneaux 72 de la rondelle 70 et les créneaux 68 du contre-écrou 66 s'entrechoquent, ce qui permet de générer des vibrations qui sont transmises au corps 32, puis à l'axe 10, grâce à la bague de serrage expansible 42, et de casser la cohésion inter-granulaire entre l'axe 10 et les pièces 12, 14. Les vibrations permettent de réduire la charge qui s'applique sur l'axe 10.

La fonction des moyens de rappel 56 est ensuite utilisée. Plus précisément, les moyens de rappel 56 vont se décompresser en exerçant leur force de rappel selon l'axe longitudinal X1 dans la deuxième direction F2, comme représenté sur les figures 4 et 8 (détaillé ci-dessus). La décompression des moyens de rappel résulte d'une action combinée des vibrations générées dans l'axe 10 par le mouvement de rotation de la rondelle 70 contre le contre-écrou 66 et de l'alignement des orifices 16, 18 des pièces 12, 14.

Selon une configuration représentée sur les figures 5 à 8, le dispositif 30 comprend une poignée 82 agencée à l'extrémité 48 du corps 32, et solidaire du corps 32. Cette poignée 82 facilite la manipulation du corps 32. Selon une autre configuration non représentée, la poignée 82 est agencée à l'extrémité 48 du corps 32, et solidaire du contre-écrou 66, de sorte qu'un utilisateur du dispositif 30 utilise la poignée 82 pour visser le contre-écrou 66. Selon une autre configuration non représentée, la poignée 82 et le contre-écrou 66 forment une seule pièce et permettent de maintenir la position de la rondelle 70.

La force maximale appliquée sur le dispositif 30 dépend des caractéristiques des moyens de rappel 56 et de la distance maximale entre l'écrou de compression 54, et plus précisément la rondelle 70, et la butée 60. En effet, pour des moyens de rappel donnés, avec certaines caractéristiques de compression, lorsque l'on comprime les moyens de rappel sur une dimension donnée, la valeur de la force de réaction est proportionnelle à la dimension donnée.

Un procédé d'utilisation du dispositif 30 va maintenant être décrit.

Pour l'insertion de l'axe 10 dans les orifices 16, 18 des pièces 12, 14 de sorte à former la liaison pivotante, l'utilisation du dispositif 30 comprend une étape d'insertion du corps 32 dans l'orifice 11 de l'axe 10, puis une étape de vissage de l'écrou papillon 38 sur la tige filetée 34 le long de l'axe longitudinal X1 selon la deuxième direction F2, de sorte que la forme tronconique de l'écrou 44 entre en contact avec et déforme la ou les rainures 47 de la bague 46. Ensuite, l'utilisation du dispositif 30 comprend une étape d'insertion, par glissement, de l'ensemble formé par l'axe 10 et le dispositif 30 dans les orifices 16, 18 des pièces 12, 14. La bague de serrage expansible 42 permet de centrer l'axe 10 lors de son insertion. La poignée 82 permet de faciliter l'utilisation du dispositif 30. L'utilisation du dispositif 30 comprend ensuite une étape de dévissage de l'écrou papillon 38 de la tige filetée 34, de sorte que la forme tronconique de l'écrou 44 sorte de la ou des rainures 47 de la bague 46, et que la bague 46 reprenne sa forme non déformée. Ensuite, l'utilisation du dispositif 30 comprend une étape de translation du corps 32 selon l'axe longitudinal X1, dans la première direction F1, de sorte à libérer le dispositif 30 de l'axe 10. Cette étape de libération du dispositif 30 de l'axe 10 comprend une sous-étape de translation de la rondelle 70 le long de l'axe longitudinal X1 selon la deuxième direction F2 de sorte à comprimer les moyens de rappel 56 entre l'écrou de compression 54 et l'organe d'appui 58, jusqu'à atteindre la butée 60, puis une sous-étape de vissage du contre-écrou 66 sur la portion externe filetée 50 du corps 32 le long de l'axe longitudinal X1 selon la deuxième direction F2, de sorte à faire coopérer les créneaux 68 du contre-écrou 66 et les créneaux 72 de la rondelle 70 et bloquer la translation de la rondelle 70 selon l'axe longitudinal X1 dans la première direction F1, puis une sous-étape de rotation de la rondelle autour de l'axe longitudinal X1 de sorte à faire glisser les créneaux 72 de la rondelle 10 contre les créneaux 68 du contre-écrou 66 de manière à décompresser les moyens de rappel 56 dans la deuxième direction F2et à entraîner l'organe d'appui 58, et donc le corps 32, en translation le long de l'axe longitudinal X1 dans la première direction F1.

Pour le désengagement de l'axe 10 des orifices 16, 18 des pièces 12, 14, l'utilisation du dispositif 30 comprend une étape d'insertion du corps 32 dans l'orifice 11 de l'axe 10 (représentée sur la figure 1), puis une étape de vissage de l'écrou papillon 38 sur la tige filetée 34 le long de l'axe longitudinal X1 selon la deuxième direction F2, de sorte que la forme tronconique de l'écrou 44 entre en contact avec et déforme la ou les rainures 47 de la bague 46 (représentée sur la figure 2). Ce vissage permet de bloquer la translation du corps 32 par rapport à l'axe 10 le long de l'axe longitudinal X1 selon la première direction F1. L'utilisation du dispositif 30 comprend ensuite une étape de vissage de l'écrou de compression 54 sur la portion externe filetée 50 du corps 32 le long de l'axe longitudinal X1 selon la deuxième direction F2, de sorte à comprimer les moyens de rappel 56 entre l'écrou de compression 54 et l'organe d'appui 58 le long de l'axe longitudinal X1 dans la deuxième direction F2, jusqu'à ce que le disque de maintien 74 entre en contact avec la butée 60 (représentée sur la figure 3). Cette étape comprend une sous-étape de translation de la rondelle 70 le long de l'axe longitudinal X1 selon la deuxième direction F2, c'est-à-dire en direction du disque de maintien 74 (représentée sur la figure 5), puis une sous-étape de vissage du contre-écrou 66 de sorte à faire coopérer les créneaux 68 du contre-écrou 66 et les créneaux 72 de la rondelle 70 et bloquer la translation de la rondelle 70 selon l'axe longitudinal X1 dans la première direction F1 (représentée sur la figure 6), et enfin une sous-étape de rotation de la rondelle 70 autour de l'axe longitudinal X1 de sorte à faire glisser les créneaux 72 de la rondelle 70 contre les créneaux 68 du contre-écrou 66. Ceci permet de comprimer progressivement les moyens de rappel 56. Lors du passage d'un créneau au créneau suivant, les créneaux 68, 72 s'entrechoquent sous l'action des moyens de rappel 56 qui exercent leur force de rappel sur la rondelle 70 en direction du contre-écrou 66. En effet, les moyens de rappel 56 se décompressent brutalement sur une faible distance, ce qui génère des vibrations dans le corps 32,qui sont transmises à l'axe 10. Ces vibrations permettent de casser les liaisons chimiques qui peuvent exister entre l'axe 10 et les pièces 12, 14.L'utilisation du dispositif 30 comprend une étape de décompression des moyens de rappel 56, en exerçant une force de rappel le long de l'axe longitudinal X1 dans la deuxième direction F2, de sorte à entraîner l'organe d'appui 58, et donc le corps 32 et l'axe 10, en translation le long de l'axe longitudinal X1 dans la première direction F1 (représentée sur la figure 4). La décompression des moyens de rappel 56 résulte d'une action combinée des vibrations générées par le mouvement de la rondelle 70 entre le contre-écrou 66 et les moyens de rappel 56 et d'un alignement correct des orifices 16, 18 des pièces 12, 14 avec l'axe 10. En effet, tant que l'alignement des orifices 16, 18 des pièces 12, 14 et l'axe 10 n'est pas correct, l'axe 10 ne peut être retiré à cause de la charge appliquée par le dispositif 30. Dès que l'alignement est correct, la charge appliquée par les moyens de rappel 56 suffit à faire sortir l'axe 10 des orifices 16, 18 des pièces 12, 14 (s'il n'y a plus de liaisons chimiques et qu'il n'y a pas de corrosion entre l'axe 10 et les pièces 12, 14).

Ces étapes peuvent être répétées si nécessaire, afin de désengager suffisamment l'axe 10 des orifices 16, 18 des première et deuxième pièces 12, 14. En particulier, l'axe 10 n'est pas complètement retiré des orifices 16, 18 des première et deuxième pièces 12, 14 lors de l'utilisation du dispositif 30. Une fois que les moyens de rappel 56 sont décompressés, les orifices 16, 18 des pièces 12, 14 sont suffisamment alignés pour permettre une extraction de l'axe 10 sans efforts. Le dispositif 30 est alors retiré, à la main par un opérateur, en utilisant la poignée 82. Comme le dispositif 30 est lié à l'axe 10, via la bague de serrage expansible 42, l'axe 10 est entièrement extrait des orifices 16, 18 des pièces 12, 14 lors du retrait du dispositif 30.

Lors des étapes d'insertion et de vissage, une charge constante élevée s'applique sur l'axe 10. Les vibrations générées par le mouvement de rotation de la rondelle 70 permettent de réduire la charge qui s'applique sur l'axe 10, et ainsi de faire sortir l'axe 10 automatiquement des orifices 16, 18 des pièces 12, 14. Une fois la charge réduite, la fonction des moyens de rappel 56 est utilisée pour désengager l'axe 10 de la liaison pivotante.

Ce dispositif 30 permet ainsi de manipuler l'axe 10 de façon simple et rapide, et de contrôler la charge appliquée sur l'axe 10 et sur la surface 23.1 de la pièce 12 lors de la manipulation (insertion et extraction) de l'axe 10. En outre, ce dispositif 30 permet de ne générer aucuns dégâts sur les première et deuxième pièces.

## Revendications

1. Dispositif (30) de manipulation d'un axe (10) présentant un orifice (11) débouchant en son centre, ledit axe (10) formant un axe creux et ledit axe (10) formant une liaison entre des première et deuxième pièces, le dispositif comprenant :
- un corps (32) s'étendant selon un axe longitudinal (X1), configuré pour être inséré dans l'orifice (11), le corps (32) présentant un alésage s'étendant selon l'axe longitudinal (X1),
- une tige filetée (34) insérée dans l'alésage du corps (32) et présentant des première et deuxième extrémités (36, 40),
- un écrou papillon (38) monté en translation par vissage sur la première extrémité (36) de la tige filetée (34) le long de l'axe longitudinal (X1) selon une deuxième direction (F2),
- une bague de serrage expansible (42) agencée sur la deuxième extrémité (40) de la tige filetée (34), et déformable sous l'action de l'écrou papillon (38) entre une position libre dans laquelle le corps (32) est mobile en translation par rapport à l'axe (10) le long de l'axe longitudinal (X1) et une position déformée dans laquelle la translation du corps (32) par rapport à l'axe (10) le long de l'axe longitudinal (X1) selon une première direction (F1) opposée à la deuxième direction (F2) est bloquée,
- un organe d'appui (58) destiné à être disposé contre l'une des première ou deuxième pièces (12),
**caractérisé en ce que** le corps (32) présente une portion externe filetée (50), et **en ce que** le dispositif comprend :
- un écrou de compression (54) vissé sur la portion externe filetée (50) du corps (32) le long de l'axe longitudinal (X1) selon la deuxième direction (F2), l'écrou de compression (54) comportant :
- une rondelle (70) mobile en translation selon l'axe longitudinal (X1) et en rotation autour de l'axe longitudinal (X1), et comprenant des créneaux (72), et
- un contre-écrou (66) vissé sur la portion filetée (50) du corps (32) et comprenant des créneaux (68) de forme complémentaire à la forme des créneaux (72) de la rondelle (70), les créneaux (68) du contre-écrou (66) étant configurés pour coopérer avec les créneaux (72) de la rondelle (70) de sorte à bloquer la translation de la rondelle (70) selon l'axe longitudinal (X1) selon la première direction (F1),
- des moyens de rappel (56) disposés entre l'écrou de compression (54) et l'organe d'appui (58) et configurés pour être comprimés entre l'écrou de compression (54) et l'organe d'appui (58) par le vissage de l'écrou de compression (54) et pour se décompresser dans la deuxième direction (F2) sous l'action de l'écrou de compression (54).

2. Dispositif (30) selon la revendication 1, **caractérisé en ce que** la bague de serrage expansible (42) comprend :
- un écrou (44) de forme tronconique encastré sur la deuxième extrémité (40) de la tige filetée (34), et
- une bague (46) déformable dans une direction transversale à l'axe longitudinal (X1) et présentant au moins une rainure (47), la bague (46) étant solidaire du corps (32), la rainure (47) de la bague (46) étant configurée pour être déformée par la forme tronconique de l'écrou (44) lors du vissage de l'écrou papillon (38).

3. Dispositif (30) selon l'une des revendications 1 ou 2, **caractérisé en ce que** le dispositif comprend une butée (60) configurée pour arrêter la compression des moyens de rappel (56).

4. Dispositif (30) selon l'une des revendications 1 à 3, **caractérisé en ce que** le dispositif comprend une poignée (82) agencée à une extrémité (48) du corps (32).

5. Procédé de manipulation d'un axe (10) présentant un orifice (11) débouchant en son centre et formant un axe creux et une liaison entre des première et deuxième pièces, au moyen d'un dispositif de manipulation comprenant un corps (32) s'étendant selon un axe longitudinal (X1) et présentant un alésage s'étendant selon l'axe longitudinal (X1), une tige filetée (34) insérée dans l'alésage du corps (32) et présentant des première et deuxième extrémités (36, 40), un écrou papillon (38) vissé sur la première extrémité (36) de la tige filetée (34), une bague de serrage expansible (42) agencée sur la deuxième extrémité (40) de la tige filetée (34), et un organe d'appui (58) disposé contre l'une des première ou deuxième pièces (12), le procédé comprenant les étapes consistant en :
- insertion du corps (32) dans l'orifice (11) ;
- vissage de l'écrou papillon (38) sur la tige filetée (34) le long de l'axe longitudinal (X1) selon une deuxième direction (F2) de sorte à déformer la bague de serrage expansible (42) et à bloquer la translation du corps (32) par rapport à l'axe (10) le long de l'axe longitudinal (X1) selon une première direction (F1) opposée à la deuxième direction (F2) ;
**caractérisé en ce que** le corps (32) présente une portion externe filetée (50), **en ce que** le dispositif de manipulation comprend un écrou de compression (54) comportant une rondelle (70) comprenant des créneaux (72) et un contre-écrou (66) vissé sur la portion externe filetée (50) du corps (32) et comprenant des créneaux (68) de forme complémentaire à la forme des créneaux (72) de la rondelle (70), et des moyens de rappel (56) disposés entre la rondelle (70) et l'organe d'appui (58), et **en ce que** le procédé comprend les étapes consistant en :
- translation de la rondelle (70) le long de l'axe longitudinal (X1) selon la deuxième direction (F2) de sorte à comprimer les moyens de rappel (56) ;
- vissage du contre-écrou (66) de sorte à faire coopérer les créneaux (68) du contre-écrou (66) avec les créneaux (72) de la rondelle (70) et bloquer la translation de la rondelle (70) selon l'axe longitudinal (X1) dans la première direction (F1) ; et
- rotation de la rondelle (70) autour de l'axe longitudinal (X1) de sorte à faire glisser les créneaux (72) de la rondelle (70) contre les créneaux (68) du contre-écrou (66) de manière à décompresser les moyens de rappel (56) dans la deuxième direction (F2).

## Patentansprüche

1. Vorrichtung (30) zur Handhabung einer Welle (10), die in ihrer Mitte eine Durchgangsöffnung (11) aufweist, wobei die Welle (10) eine Hohlwelle bildet und die Welle (10) eine Verbindung zwischen einem ersten und einem zweiten Teil bildet, wobei die Vorrichtung Folgendes beinhaltet:
- einen Körper (32), der sich gemäß einer Längsachse (X1) erstreckt und dazu konfiguriert ist, in die Öffnung (11) eingeführt zu werden, wobei der Körper (32) eine Bohrung aufweist, die sich gemäß der Längsachse (X1) erstreckt,
- eine Gewindestange (34), die in die Bohrung des Körpers (32) eingeführt ist und ein erstes und ein zweites Ende (36, 40) aufweist,
- eine Flügelmutter (38), die durch Aufschrauben auf das erste Ende (36) der Gewindestange (34) entlang der Längsachse (X1) gemäß einer zweiten Richtung (F2) translatorisch beweglich montiert ist,
- einen expandierbaren Klemmring (42), der auf dem zweiten Ende (40) der Gewindestange (34) eingerichtet ist und unter Einwirkung der Flügelmutter (38) zwischen einer freien Position, in der der Körper (32) mit Bezug auf die Welle (10) entlang der Längsachse (X1) translatorisch beweglich ist, und einer verformten Position, in der die translatorische Bewegung des Körpers (32) mit Bezug auf die Welle (10) entlang der Längsachse (X1) gemäß einer ersten Richtung (F1), die zu der zweiten Richtung (F2) entgegengesetzt ist, blockiert ist, verformbar ist,
- ein Anlageorgan (58), das dazu bestimmt ist, gegen eines von dem ersten oder zweiten Teil (12) angeordnet zu sein,
**dadurch gekennzeichnet, dass** der Körper (32) einen Außenabschnitt (50) mit Gewinde aufweist und dass die Vorrichtung Folgendes beinhaltet:
- eine Druckmutter (54), die entlang der Längsachse (X1) gemäß der zweiten Richtung (F2) auf den Außenabschnitt (50) mit Gewinde des Körpers (32) aufgeschraubt ist, wobei die Druckmutter (54) Folgendes umfasst:
- eine Scheibe (70), die gemäß der Längsachse (X1) translatorisch und um die Längsachse (X1) rotatorisch beweglich ist und Zacken (72) beinhaltet, und
- eine Kontermutter (66), die auf den Gewindeabschnitt (50) des Körpers (32) aufgeschraubt ist und Zacken (68) mit einer zu den Zacken (72) der Scheibe (70) komplementären Form beinhaltet, wobei die Zacken (68) der Kontermutter (66) dazu konfiguriert sind, mit den Zacken (72) der Scheibe (70) zusammenzuwirken, um die translatorische Bewegung der Scheibe (70) gemäß der Längsachse (X1) gemäß der ersten Richtung (F1) zu blockieren,
- Rückstellmittel (56), die zwischen der Druckmutter (54) und dem Anlageorgan (58) angeordnet sind und dazu konfiguriert sind, durch das Aufschrauben der Druckmutter (54) zwischen der Druckmutter (54) und dem Anlageorgan (58) zusammengedrückt zu werden und sich unter Einwirkung der Druckmutter (54) in der zweiten Richtung (F2) zu entspannen.

2. Vorrichtung (30) nach Anspruch 1, **dadurch gekennzeichnet, dass** der expandierbare Klemmring (42) Folgendes beinhaltet:
- eine kegelstumpfförmige Mutter (44), die auf dem zweiten Ende (40) der Gewindestange (34) eingerichtet ist, und
- einen Ring (46), der in einer zu der Längsachse (X1) quer verlaufenden Richtung verformbar ist und mindestens eine Nut (47) aufweist, wobei der Ring (46) fest mit dem Körper (32) verbunden ist, wobei die Nut (47) des Rings (46) dazu konfiguriert ist, beim Aufschrauben der Flügelmutter (38) durch die kegelstumpfförmige Form der Mutter (44) verformt zu werden.

3. Vorrichtung (30) nach einem der Ansprüche 1 oder 2, **dadurch gekennzeichnet, dass** die Vorrichtung einen Anschlag (60) beinhaltet, der dazu konfiguriert ist, das Zusammendrücken der Rückstellmittel (56) zu stoppen.

4. Vorrichtung (30) nach einem der Ansprüche 1 bis 3, **dadurch gekennzeichnet, dass** die Vorrichtung einen Griff (82) beinhaltet, der an einem Ende (48) des Körpers (32) eingerichtet ist.

5. Verfahren zur Handhabung einer Welle (10), die in ihrer Mitte eine Durchgangsöffnung (11) aufweist und eine Hohlwelle und eine Verbindung zwischen einem ersten und einem zweiten Teil bildet, mit Hilfe einer Handhabungsvorrichtung, die Folgendes beinhaltet: einen Körper (32), der sich gemäß einer Längsachse (X1) erstreckt und eine Bohrung aufweist, die sich gemäß der Längsachse (X1) erstreckt, eine Gewindestange (34), die in die Bohrung des Körpers (32) eingeführt ist und ein erstes und ein zweites Ende (36, 40) aufweist, eine Flügelmutter (38), die auf das erste Ende (36) der Gewindestange (34) aufgeschraubt ist, einen expandierbaren Klemmring (42), der auf dem zweiten Ende (40) der Gewindestange (34) eingerichtet ist, und ein Anlageorgan (58), das gegen eines von dem ersten oder zweiten Teil (12) angeordnet ist, wobei das Verfahren die Schritte beinhaltet, die aus Folgendem bestehen:
- Einführen des Körpers (32) in die Öffnung (11);
- Aufschrauben der Flügelmutter (38) auf die Gewindestange (34) entlang der Längsachse (X1) gemäß einer zweiten Richtung (F2), um den expandierbaren Klemmring (42) zu verformen und die translatorische Bewegung des Körpers (32) mit Bezug auf die Welle (10) entlang der Längsachse (X1) gemäß einer ersten Richtung (F1), die zu der zweiten Richtung (F2) entgegengesetzt ist, zu blockieren;
**dadurch gekennzeichnet, dass** der Körper (32) einen Außenabschnitt (50) mit Gewinde aufweist, dass die Handhabungsvorrichtung Folgendes beinhaltet: eine Druckmutter (54), die eine Scheibe (70), die Zacken (72) beinhaltet, und eine Kontermutter (66), die auf den Außenabschnitt (50) mit Gewinde der Körpers (32) aufgeschraubt ist und Zacken (68) mit einer zu den Zacken (72) der Scheibe (70) komplementären Form beinhaltet, umfasst, und Rückstellmittel (56), die zwischen der Scheibe (70) und dem Anlageorgan (58) angeordnet sind, und dass das Verfahren die Schritte beinhaltet, die aus Folgendem bestehen:
- translatorisches Bewegen der Scheibe (70) entlang der Längsachse (X1) gemäß der zweiten Richtung (F2), um die Rückstellmittel (56) zusammenzudrücken;
- Aufschrauben der Kontermutter (66), um die Zacken (68) der Kontermutter (66) mit den Zacken (72) der Scheibe (70) zusammenwirken zu lassen und die translatorische Bewegung der Scheibe (70) gemäß der Längsachse (X1) in der ersten Richtung (F1) zu blockieren; und
- Drehen der Scheibe (70) um die Längsachse (X1), um die Zacken (72) der Scheibe (70) gegen die Zacken (68) der Kontermutter (66) gleiten zu lassen, um die Rückstellmittel (56) in der zweiten Richtung (F2) zu entspannen.

## Claims

1. Device (30) for handling a shaft (10) having an orifice (11) emerging at its centre, said shaft (10) forming a hollow shaft and said shaft (10) forming a link between first and second parts, the device comprising:
- a body (32) extending along a longitudinal axis (X1), configured to be inserted into the orifice (11), the body (32) having a bore extending along the longitudinal axis (X1),
- a threaded rod (34) inserted into the bore of the body (32) and having first and second ends (36, 40),
- a butterfly nut (38) mounted to translate by screwing on the first end (36) of the threaded rod (34) along the longitudinal axis (X1) in a second direction (F2),
- an expandable clamping ring (42) arranged on the second end (40) of the threaded rod (34), and deformable under then action of the butterfly nut (38) between a free position in which the body (32) is movable in translation with respect to the shaft (10) along the longitudinal axis (X1) and a deformed position in which the translation of the body (32) with respect to the shaft (10) along the longitudinal axis (X1) in a first direction (F1) opposite to the second direction (F2) is blocked,
- a bearing member (58) intended to be disposed against one of the first or second parts (12), **characterized in that** the body (32) has a threaded outer portion (50), and **in that** the device comprises:
- a compression nut (54) screwed onto the threaded outer portion (50) of the body (32) along the longitudinal axis (X1) in the second direction (F2), the compression nut (54) comprising:
- a washer (70) that is movable in translation along the longitudinal axis (X1) and in rotation about the longitudinal axis (X1), and comprising notches (72), and
- a lock nut (66) screwed onto the threaded portion (50) of the body (32) and comprising notches (68) of a form complementing the form of the notches (72) of the washer (70), the notches (68) of the lock nut (66) being configured to cooperate with the notches (72) of the washer (70) so as to block the translation of the washer (70) on the longitudinal axis (X1) in the first direction (F1),
- return means (56) disposed between the compression nut (54) and the bearing member (58) and configured to be compressed between the compression nut (54) and the bearing member (58) by the screwing of the compression nut (54) and to decompress in the second direction (F2) under the action of the compression nut (54).

2. Device (30) according to Claim 1, **characterized in that** the expandable clamping ring (42) comprises:
- a nut (44) of frustoconical form embedded on the second end (40) of the threaded rod (34), and
- a ring (46) that is deformable in a direction transversal to the longitudinal axis (X1) and having at least one groove (47), the ring (46) being secured to the body (32), the groove (47) of the ring (46) being configured to be deformed by the frustoconical form of the nut (44) upon the screwing of the butterfly nut (38).

3. Device (30) according to one of Claims 1 or 2, **characterized in that** the device comprises an abutment (60) configured to stop the compression of the return means (56).

4. Device (30) according to one of Claims 1 to 3, **characterized in that** the device comprises a handle (82) arranged at an end (48) of the body (32).

5. Method for handling a shaft (10) having an orifice (11) emerging at its centre and forming a hollow shaft and a link between first and second parts, at least one handling device comprising a body (32) extending along a longitudinal axis (X1) and having a bore extending along the longitudinal axis (X1), a threaded rod (34) inserted into the bore of the body (32) and having first and second ends (36, 40), a butterfly nut (38) screwed onto the first end (36) of the threaded rod (34), an expandable clamping ring (42) arranged on the second end (40) of the threaded rod (34), and a bearing member (58) disposed against one of the first or second parts (12), the method comprising the steps of:
- inserting the body (32) into the orifice (11);
- screwing the butterfly nut (38) onto the threaded rod (34) along the longitudinal axis (X1) in a second direction (F2) so as to deform the expandable clamping ring (42) and to block the translation of the body (32) with respect to the shaft (10) along the longitudinal axis (X1) in a first direction (F1) opposite to the second direction (F2);
**characterized in that** the body (32) has a threaded outer portion (50), **in that** the handling device comprises a compression nut (54) comprising a washer (70) comprising notches (72) and a lock nut (66) screwed onto the threaded outer portion (50) of the body (32) and comprising notches (68) of a form complementing the form of the notches (72) of the washer (70), and return means (56) disposed between the washer (70) and the bearing member (58), and **in that** the method comprises the steps of:
- translating the washer (70) along the longitudinal axis (X1) in the second direction (F2) so as to compress the return means (56);
- screwing the lock nut (66) so as to make the notches (68) of the lock nut (66) cooperate with the notches (72) of the washer (70) and block the translation of the washer (70) on the longitudinal axis (X1) in the first direction (F1); and
- rotating the washer (70) about the longitudinal axis (X1) so as to make the notches (72) of the washer (70) slide against the notches (68) of the lock nut (66) so as to decompress the return means (56) in the second direction (F2).
